# EUROPEAN PATENT SPECIFICATION

(11) **EP 3 660 412 B1**
(45) Date of publication and mention of the grant of the patent: **13.12.2023**
(21) Application number: 19205622.4
(22) Date of filing: 28.10.2019
(51) Int. Cl.: F24F 11/62, F24F 11/46, F24F 11/70, F24F 11/83

(54) **A METHOD FOR CONTROLLING ENERGY DISTRIBUTION IN A THERMAL NETWORK**
VERFAHREN ZUR STEUERUNG DER ENERGIEVERTEILUNG IN EINEM THERMISCHEN NETZ
PROCÉDÉ DE COMMANDE DE LA DISTRIBUTION D'ÉNERGIE DANS UN RÉSEAU THERMIQUE

(30) Priority: 27.11.2018 DK PA201800921
(43) Date of publication of application: 03.06.2020
(73) Proprietor: Danfoss A/S, 6430 Nordborg (DK)
(72) Inventor: VNUCEC, Dusko, 6430 Nordborg (DK); JUNGIC, Milan, 6430 Nordborg (DK)
(74) Representative: Inspicos P/S

(56) References cited:
- EP-A1- 3 082 010
- EP-A1- 3 168 541
- WO-A1-2018/015508

## Description

### FIELD OF THE INVENTION

The present invention relates to a method for controlling energy supply distribution in a thermal network, such as a heating network or a cooling network, during peak loads.

### BACKGROUND OF THE INVENTION

Load variations in a thermal network are a well-known challenge throughout the entire year, as variations exist both daily and seasonally. Peaks in load variations are in particular challenging as they cause increased costs and failures on the thermal network. End use loads are normally a sum of loads for heating or cooling, and loads for domestic hot water preparation for all network users and network losses. Peak loads are also aggregated loads of all user's peak loads and network losses within relatively short time periods, and they are typically much higher than base or average loads which can be supplied by the thermal network during its normal operation.

The origin of peak loads lies in consumer behaviour, weather conditions, and ever-increasing number of new energy consumers. Typical consumer behaviour causing peak loads on a daily basis is, e.g., showering in the morning and/or evening thereby producing additional loads on heating systems. Weather conditions typically lead to seasonal load variation, e.g. solar radiation during the day causes increased use of coolers, outdoor temperature can cause increased demands for cooling during summer and increased demands for heating during winter. The use of renewable energy sources and waste heat requires networks to operate at lower temperature and supply same amount of energy, which is also limiting utilities to cover the required peak load capacity by operating network with higher temperatures in those periods. Furthermore, new energy consumers are, e.g., network extensions with new residential areas, shopping malls, and in general increase of population in big cities, which further increase energy demands and contribute to formation of peak loads.

To cover for network peak load demands a first option is to provide higher temperatures in case of heating systems and lower temperatures in case of cooling systems, as well as to control pumps of the thermal network to deliver higher flow. When this is not sufficient additional energy sources (e.g. boilers, chillers, energy accumulation tanks, etc.) have to be installed, carrying additional capital and operational expenditure for relatively low yearly operating hours. Increasing or decreasing temperatures in the thermal network may not be an optimal solution as a carrier (e.g. water) propagates through the network with a limited speed and through long distances from suppliers to consumers. Namely, any change of temperatures must be planned well in advance in order to meet demands. Yet another option to cover for network peak load demands is to shut off energy supply to selected end consumers during selected time periods and thereby reduce peak load demands. This solution decreases efficiency of the thermal network as restarting power delivery to the selected end consumers requires additional energy.

EP 3 082 010 A1 discloses a system and a method for dynamically balancing a heat load in a district heating network. In order to level peaks in heat load, the entity to be heated is divided into a number of enclosures, and a thermal behaviour scheme of each enclosure, attributes of the enclosures and external information relating to heating are obtained. On the basis of the obtained information one or more optimization schemes for optimizing heat load is created. The optimization scheme may include prioritizing one or more categories. The system may optimize thermostat behaviour to the enclosures, and the thermostat operations of the enclosures may be inter-correlated to perform heating control optimization at the heatable entity level.

EP 3 168 541 A1 discloses a flow network for distributing a heat transferring fluid between a plural of consumers. The system may be operated under different modes of regulations, the basic being to balance a thermal flow system supplying heat transfer fluid at a supply flow rate and a supply temperature to a plural of consumers. Each consumer is associated with a connected control equipment configured to regulate the flow rate of the heat transfer fluid delivered to the consumer such that the associated consumer receives a flow rate of heating fluid corresponding to a set fraction of the total supply flow rate.

WO 2018/015508 A1 discloses a control system of a Demand-Based Operation of a DH/DC network for a distributed control of local heating and/or cooling flows from heating and/or cooling sources through local heating and/or cooling systems using local thermostatically controlled valves. The local thermostatically controlled valves are adapted to set the local heating and/or cooling flows.

### DESCRIPTION OF THE INVENTION

It is an object of embodiments of the invention to provide a method for controlling energy supply distribution in a thermal network during peak loads in such a manner that peak loads are reduced.

It is a further object of embodiments of the invention to provide a method for optimal operation of a thermal network during peak load demands with improved efficiency.

It is a yet further object of embodiments of the invention to provide a method for controlling energy supply distribution in a thermal network which allows for efficient operation of the network without a need for additional energy sources.

According to a first aspect, the invention provides a method for controlling energy supply distribution in a thermal network during peak loads according to claim 1.

Thus, according to the first aspect, the invention provides a method for controlling energy supply distribution in a thermal network during peak loads. The thermal network is a system for maintaining temperature at a desired level at end users by using thermal energy. The thermal network comprises a supply side and a consumer side. The thermal energy for the network is typically generated in the supply side of the thermal network and is then distributed through a pipe system towards the plurality of consumers, i.e. towards the consumer side of the thermal network. Distribution of the thermal energy needs to be a controlled process in order to have an efficient and reliable thermal network.

The supply side comprises one or more suppliers, each being arranged to supply thermal energy to the thermal network. The suppliers may be connected among each other thereby creating a central source which delivers thermal energy to a range of different consumers on the consumer side. Alternatively or additionally, each supplier from the supply side may be connected to a pipe system which directly delivers thermal energy to one or more consumers on the consumer side. The suppliers may generate thermal energy by exploiting solar energy, nuclear power, geothermal energy, fossil fuels, etc. The suppliers could, e.g., include one or more combined heat and power plant, in which case the thermal network may be in the form of a district heating network. A plurality of pumps may be a part of the suppliers pumping thermal energy through the thermal network.

The consumer side is configured to communicate with the supply side. This communication may be established through the pipe system which transports thermal energy from the supply side to the consumer side. The consumer side comprises a plurality of consumers, each being arranged to consume thermal energy from the thermal network, i.e. thermal energy delivered from the suppliers. The consumers may be residential buildings and houses, industrial buildings, public buildings, factories, department stores, restaurants, hotels, etc. Each consumer has a different loads profile, i.e. an energy usage profile, as energy demands are different and variable throughout the day for each consumer. Loads imposed to the thermal network are normally a sum of loads from all the consumers of the consumer side and thereby profile of the loads imposed to the thermal network also varies throughout the day. The profile of the loads typically has peak loads which reflect high energy demands during certain time periods during each day.

In the present context, the term "peak loads" should be interpreted as the highest amount of energy that consumers demand from the supply side during selected time periods. The peak loads may exceed the maximum energy that can be delivered from the suppliers of the supply side. Therefore, there is a need to reduce these peak loads in order to avoid implementation of additional suppliers at the supply side or directly at some of the consumers. The peak loads may originate from well-established behaviour of individual consumers. For instance, residential buildings typically have high energy demands in the morning and/or in the evening when most of the residents are at their homes, and this may create two peak loads. Public buildings typically have high energy demands during the working hours when computers, lights, heating/cooling are on, and this may create another peak load.

According to the present invention, controlling energy supply distribution in the thermal network during the peak loads starts with the step of identifying at least one low-demand consumer from the plurality of consumers. The low-demand consumer has decreased energy demands during selected time periods. As mentioned above, each of the plurality of consumers typically has well established behaviour in respect of energy consumption, i.e., having periods with low-energy consumption and periods with high-energy consumption. For instance, residential buildings typically have low-energy consumption during working hours, as the residents are typically away from their homes during week days. This behaviour may be recorded in a demand forecast system and the residential buildings may be classified as low-demand consumers during working hours on week days. The demand forecast system on the supply side may be constantly updated by energy consumption reports from each of the plurality of consumers on the consumer side. By using the demand forecast systems, at least one low-demand consumer may be identified for each selected time period. As the demand forecast system may be updated regularly, identified low-demand consumers may be different from day to day. The demand forecast system may be based on and supported by artificial intelligence and learning from massive data. Alternatively, the low-demand consumers may be identified by their operating/opening hours, e.g., a shopping mall with opening hours from 9:00 to 19:00 may be a low-demand user from 18:30 to 8:30, a cinema with opening hours from 15:00 to 22:00 may be classified as a low-demand user from 14:30 to 21:30, buildings with large thermal mass (e.g. concrete) can as well be identified as low-demand consumers during operating hours since short period of energy supply reduction would have no or minor influence on comfort.

Once the low-demand consumer(s) is/are identified, energy supply towards these low-demand consumer(s) is decreased by controlling mass flow between the supply side and the identified low-demand consumer(s) during the selected time periods. As these low-demand consumers do not require full supply during the selected time periods, energy supply can be decreased without affecting comfort of the low-demand consumers. Energy supply towards the identified low-demand consumer(s) may be decreased by, e.g., 10%, 15%, 20%, 25%, 30%, 35%, 40%, or more. The level of decrease may depend on the number of identified low-demand consumers and/or their nominal energy demands and/or their ability to lower their energy consumption. If there are many, e.g., 50 or 100 identified low-demand consumers, and their nominal aggregated energy requirements are large, e.g. 1MW, or 10MW or 50MW, then the decrease may be only 10% or 20%. Additionally, the level of decrease may also depend on the remaining consumers and their energy demands during peak loads. The decrease in energy supply results in certain aggregated loads which are subtracted from the total thermal network loads thereby reducing peak loads during the selected peak hours.

The decrease in energy supply towards the low-demand consumers is performed by controlling mass flow between the supply side and the identified low-demand consumer(s). By controlling mass flow towards the selected consumers, energy supply is instantaneously affected. Mass flow is typically decreased below nominal flow level which reflects contractual power demands, thereby delivering less energy to the end consumer. Means for controlling mass flow between the supply side and the consumers will be described below in details.

The selected time periods can be at different times of the day and may have different duration. The selected time periods may exist throughout the entire day, e.g., from 1AM until 2AM, or from 3AM until 5AM, or from 7AM until 9AM, or from 2PM until 5PM, or from 9PM until 11PM, etc. The selected time periods reflect peak loads imposed on the thermal network. Namely, the loads are decreased based on the selected time periods during which the loads can be reduced below the design/contractual load as it is outside of operating time of the identified low-demand consumers. Depending on building type and load characteristics, the maximum allowed load reduction rate is defined (e.g. 20% reduction in case of concrete multifamily building for a max period of 2 hours). In one example, due to higher demands from residential buildings peak loads may appear in the morning, e.g. from 6-8 o'clock, the selected time period can be 2 hours. Energy supply to, e.g., the public buildings may be decreased as these may not have high requirements at that selected time period. In that manner, total loads imposed on the thermal network are decreased, without affecting comfort of the plurality of consumers. Outside of the selected time periods, i.e., when there are no peak loads, all the consumers are supplied with 100% nominal energy, i.e., designed contractual power. Moreover, when there are no peak loads, some of the consumers may be supplied with even higher energy than the nominal value to enable fast ramp-up and load response to reach comfort temperature required by these consumers.

Energy supply towards the remaining consumers of the plurality of consumers is maintained during the selected time periods. Namely, the remaining consumers will be supplied with the designed/contractual power without any disturbance.

By reducing energy supply towards selected consumers, need for adding new power sources to the thermal network or need for increasing/decreasing supply temperature is eliminated. Furthermore, by decreasing energy supply towards the low-demand consumers operating efficiency at the consumer side is improved especially compared to situation when these low-demand consumers would be shut-off, as no energy is required for bringing energy supply to the low-demand consumers back to an original stage. The efficiency benefit at the consumer side is a result of increased temperature difference between supply side and return pipe system when the flow has been reduced below the nominal flow level. Furthermore, operating efficiency at the supply side is also improved as substantially no additional energy is required for increasing energy supply towards the low-demand consumers. On the supply side the efficiency benefit comes from the lower losses in the thermal network when the peak load demand is managed by decreased energy supply towards the selected users compared to, e.g., increasing/decreasing supply temperature or adding new energy sources. Thereby, operating efficiency of the entire thermal network is improved. Additionally, re-distribution of energy between the consumers leads to reduction of the total energy demand on the network level and consequently to reduction of required energy in the peak loads periods and the need for adding additional energy sources, e.g. starting up expensive peak load boilers or peak load chillers.

When the decrease of energy supply is performed by controlling mass flow between the supply side and the identified low-demand consumers, an instant load response is achieved as well as an increase in temperature difference between the supply side and consumer side, resulting in an improved efficiency of the supply side and thermal network.

The consumer side comprises a plurality of differential pressure valves, each of the plurality of differential pressure valves being arranged at the interface between the supply side and one of the plurality of consumers, and the step of decreasing energy supply towards the low-demand consumer(s) by controlling mass flow is performed by reducing the differential pressure across the differential pressure valve(s) arranged at the interface between the supply side and the identified low-demand consumer(s). Any change of differential pressure across the differential pressure valve causes a change of flow through the differential pressure valve, and consequently a change in supplied energy. By influencing pressure, energy supply towards consumers is influenced in real time, thus securing an instant response. The differential pressure valves are widely used in heating and cooling networks and may be realised in many different designs. A common feature of all is a sensing element and a spring. The sensing element may be a membrane or a piston, that transforms differential pressure into force and the spring usually counteracts that force. When the differential pressure is reduced, the equilibrium of the two forces which determines the state of the controlling element, i.e. opening of a valve's cone, changes, and consequently the opening degree of the valve is reduced. Reduced opening degree then results in reduced mass flow, i.e., by reducing the differential pressure across the differential pressure valve, it is possible to reduce the mass flow and energy at heat transfer unit.

The differential pressure valves may be controlled via a differential pressure controller which may further be in communication with the demand forecast systems sending instructions about at which differential pressure valves are to be controlled. The differential pressure across the differential pressure valves may be reduced by changing a set-point of the differential pressure valve. The set-point may be changed by sending a control signal, e.g. 0(2)-10V or 4-20 mA, or a new set-point value via communication line, to an electric actuator exercising a spring on the differential pressure valve and consequently reducing available differential pressure. Once the differential pressure across the differential pressure valves interfacing the low-demand consumers and the supply side is changed, mass flow and energy supply to the selected low-demand consumers will also change. As soon as the selected time period is over, the set-point of the differential pressure valve will be set back to nominal value and 100% energy supply to the low-demand consumers will be established again. By reducing the differential pressure at the interface between the supply side and the low-demand consumers, the change in mass flow is substantially instantaneous, and thereby the decrease in energy supply towards these selected consumers is also substantially instantaneous. Additionally, by reducing the differential pressure and consequently the mass flow on the consumer side, a temperature difference between a temperature at the supply side and a return temperature from the low-demand consumers will automatically be increased, resulting in better network efficiency. Furthermore, after the selected time period the differential pressure is controlled again and the 'lost' energy is also regained.

Additionally, the consumer side may comprise a plurality of flow control valves, each of the plurality of flow control valves being arranged at the interface between the supply side and one of the plurality of consumers, and the step of decreasing energy supply towards the low-demand consumers by controlling mass flow may be performed by reducing the mass flow through the flow control valve(s) arranged at the interface between the supply side and the identified low-demand consumer(s). In one example, the flow control valve may have differential pressure controller integrated therein, and the flow towards the low-demand consumers may be changed by changing a set-point of the differential pressure controller. Alternatively, flow control valves such as motorized ball valves, motorized butterfly valves, or motorized globe valves may be used. When using one of these valves the mass flow may be reduced by reducing an opening degree of the valve. The opening degree of the flow control valve may be changed by sending a control signal, e.g. 0(2)-10V, or current, or three-point signal, to an electric actuator reducing the flow and energy supply to the low-demand consumers. As soon as the selected time period is over, the opening degree of the flow control valves will be set back to nominal value and 100% energy supply to the low-demand consumers will be established again. By reducing the opening degree of the flow control valves at the interface between the supply side and the low-demand consumers, the change in mass flow is substantially instantaneous, and thereby the decrease in energy supply towards these selected consumers is also substantially instantaneous. Additionally, by reducing the differential pressure and consequently the mass flow on the consumer side, a temperature difference between a temperature at the supply side and a return temperature from the low demand consumers will automatically be increased, resulting in better network efficiency. Furthermore, after the selected time period the opening degree of the flow control valves is controlled again and the 'lost' energy is also regained.

The consumer side, i.e., each of the plurality of consumers, may comprise automatic flow limiters, pressure independent control valves, ON/OFF valves with an intelligent actuator which can affect a set-point of the differential pressure and consequently flow available to the consumer. These components may change the amount of energy supplied to the consumers and additionally they may optimize operation of the thermal network. Additionally, these components may be controlled remotely from one centralized control system which may send and change set points of the flow control components.

The method may further comprise the step of determining a required energy reduction, the step being performed before the step of decreasing energy supply towards the identified low-demand consumer(s). Based on statistics related to energy consumption of the plurality of consumers, a total energy demand for a selected period of time and/or for one day may be predicted and estimated. On the other hand, the thermal network may have a predetermined capacity, i.e. energy which it may deliver and operate optimally. Both the total energy demand and the predetermined capacity are functions of time of the day. During peak loads, the total energy demand is typically higher than the energy which the energy suppliers may deliver for optimal operation. By comparing the total energy demand with the predetermined capacity the required energy reduction may be determined. Every time when the total energy demand is higher than the predetermined capacity, the required energy reduction will be determined. The result of comparison may be that energy supplied to the plurality of consumers need to be reduced several times during the day to ensure optimal operation of the thermal network.

The step of determining the required energy reduction may be performed by a computer unit running load management software. The computer unit may receive data from the demand forecast systems and based on the received data may estimate the total energy demand. Additionally, the computer unit may receive feedback from each supplier on the supply side, and based on the feedback calculate the predetermined capacity of the thermal network. The feedback from the supply side may be based on, e.g., energy meter input from the suppliers. Based on the data from the demand forecast system and the feedback from the supply side the computer unit may estimate the required energy reduction and time duration of the reduction, i.e., duration of the selected time period(s). The load management software may then run an energy reduction control algorithm which may then control the mass flow by controlling, e.g., differential pressure valve(s), flow control valve(s), etc. and thereby adjust the flow to the low-demand consumers thereby reducing energy supply by, e.g., 20-30% during the selected time period. The computer unit may generate events and send new set points to selected flow control devices reducing energy supply to the selected consumers. When unpredictable peak loads occur, the energy reduction control algorithm may, based on available data about energy consumption from some consumers and their response time, calculate possible peak load reduction and inform network operators regarding the possibility of shifting the energy in the peak load period to off peak load time. The computer unit may be a part of the supply side. It should be noted that depending on the required energy reduction not all of the identified low-demand consumer may experience energy reduction. If the amount of the required energy reduction is small compared to the number of identified low-demand consumers and their nominal power consumption only some of the identified low-demand consumers will have reduction in power delivery. The load management software running the energy control algorithm may determine which low-demand consumers will be used for energy reduction. Namely, once the low-demand consumers are identified, information about their nominal energy consumption, i.e. contractual load, can be obtained. The required energy reduction may then be used to select some of the identified low-demand consumers based on their nominal energy consumption and their thermal characteristics.

The method may further comprise the step of defining one or more groups of consumer based on a set of specific attributes. The set of specific attributes may include type of energy usage profile, e.g. commercial, industrial and public buildings where the energy supply can significantly be reduced for a period of time which is outside of their operating time, energy consumption behaviour, energy usage profile, contractual agreements, etc. The groups may be changed and redefined as behaviour of the consumers is dynamic and constantly changes. Aggregating of consumers into virtual groups may then be made based on technical, behavioural, energy usage profile or contractual agreements. When decreasing energy supply towards the identified low-demand consumers, the defined groups may be used, i.e., energy supply may be reduced towards an entire group comprising at least one identified low-demand consumer.

Alternatively, the groups of consumers may be predefined, i.e., the consumers belonging to the same usage profile may form one group. Similarly to the above described case, when decreasing energy supply towards the identified low-demand consumers, energy supply may be reduced towards an entire predefined group comprising at least one identified low demand consumer.

At least some of the remaining consumers may have increased energy demands during the selected time periods. Typically, only a few consumers or a group of consumers will have increased energy demands during the selected time periods mainly contributing to formation of peak loads. By reducing energy supply towards the identified low-demand consumers, neither the thermal network nor the consumers with increased energy demands will feel any fault during operation. Some of the remaining consumers may have constant power consumption throughout the entire day. Normally, these consumers will never experience reduction in energy supply.

The thermal network may comprise temperature sensors at the supply side and at the consumer side. The temperature sensors are configured to sense a temperature at the supply side and a return temperature from the consumer side. The thermal network may be controlled such that a temperature difference between a temperature at the return from the supply side and a return temperature from the low demand consumers is maximized. If this temperature difference is kept constant the thermal network may operate in a most efficient manner delivering required energy to the plurality of consumers with a minimum possible mass flow.

The thermal network may be a heating network. The supply side of the heating network may comprise one or more heating suppliers providing heating to the plurality consumers. A typical heat transfer unit at the consumer side may comprise of a heat exchanger, electronic temperature controller, several ON/OFF valves and self-acting differential pressure controllers which may maintain constant pressure drop over flow control valves. Differential pressure controllers may be integrated into flow control valves known as pressure independent control valves (PICV). Some types of heat transfer units may have automatic flow limiters instead of differential pressure controllers, which are also a kind of differential pressure controllers that keep constant differential pressure over variable orifice. In some rare cases only manual ON/OFF valves or manual balancing valves may be used with the aim of limiting maximum flow and maximum energy supply to the low-demand consumers.

Alternatively, the thermal network may be a cooling network. Similar to the heating network, the supply side of the cooling network may comprise one or more cooling suppliers providing cooling to the plurality of consumers. The cooling network may further comprise components similar to the components comprised in the heating network.

According to a second aspect, the invention provides a system for controlling a thermal network during peak loads according to claim 9.

The system according to the second aspect of the invention may be controlled by the method according to the first aspect of the invention. The skilled person would therefore readily understand that any feature described in combination with the first aspect of the invention could also be combined with the second aspect of the invention, and vice versa. Accordingly, the remarks set forth above with reference to the first aspect of the invention are equally applicable here.

The means for identifying at least one low-demand consumer may include demand forecast systems comprising databases which are updated, e.g. on a daily basis, based on a daily consumption of each of the plurality of consumers. The databases may be in communication with both the supply side and the consumer side, such that the entire thermal network may be controlled based on data from the databases.

The mass flow controlling means includes differential pressure valves and may include various types of valves, such as flow control valves, ON/OFF valves, and similar.

The thermal network may be a heating network. According to this embodiment, the supply side of the heating network may comprise one or more heating suppliers, and the consumer side may comprise one or more heating consumers.

The thermal network may be a cooling network. According to this embodiment, the supply side of the cooling network may comprise one or more cooling suppliers, and the consumer side may comprise one or more cooling consumers.

### BRIEF DESCRIPTION OF THE DRAWINGS

The invention will now be described in further detail with reference to the accompanying drawings in which
Fig. 1 shows a thermal network according to an embodiment of the invention, comprising a supply side and a consumer side comprising a plurality of consumers grouped in groups based on behavioural specifics and energy usage profiles,
Fig. 2 shows a typical energy demand profile during a day comprising three peak load periods,
Fig. 3 shows a change in energy profile as a result of controlling energy supply distribution in a thermal network during peak loads in accordance with a method according to an embodiment of the invention, and
Fig. 4 illustrates a part of a thermal network according to an embodiment of the invention, on the consumer side.

### DETAILED DESCRIPTION OF THE DRAWINGS

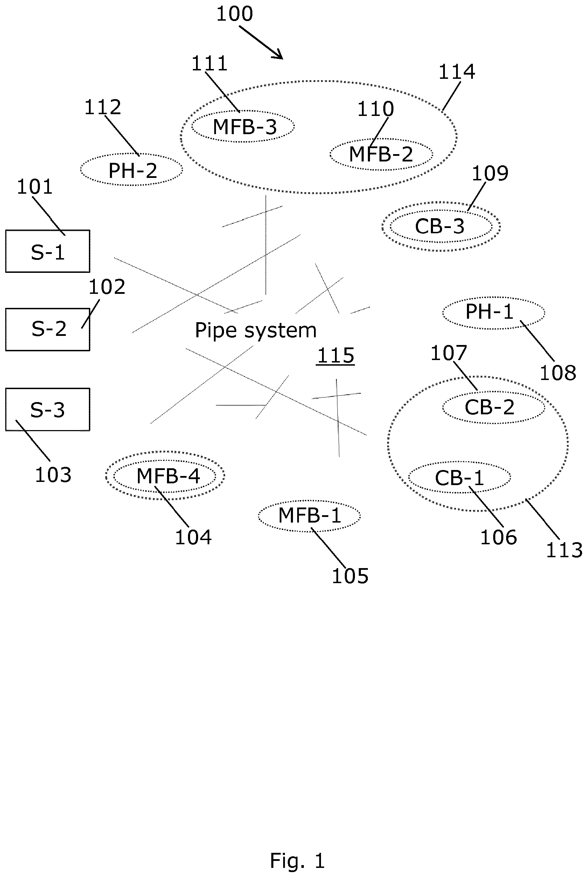

Fig. 1 shows a thermal network 100 according to an embodiment of the invention, comprising a supply side and a consumer side. The supply side comprises three suppliers 101, 102, 103, while the consumer side comprises a plurality of consumers 104-112. Some of the consumers are grouped into groups 113, 114, based on their behavioural specifics and energy usage profiles. The supply side and the plurality of consumers 104-112 are interconnected by a pipe system 115 which transports thermal energy from the suppliers 101-103 to the consumers 104-112.

The suppliers 101-103 are arranged to supply thermal energy to the thermal network 100, i.e., to the plurality of consumers 104-112 which are arranged to consume thermal energy from the thermal network 100. Each supplier 101-103 is connected to the pipe system 115 which then directly delivers thermal energy to the plurality of consumers 104-112. Alternatively, the suppliers 101-103 may be connected among each other, thereby creating a central source which then delivers thermal energy to the plurality of consumers 104-112 on the consumer side. The suppliers 101-103 may generate thermal energy by exploiting solar energy, geothermal energy, fossil fuels, etc. The suppliers 101-103 could, e.g., include one or more combined heat and power plant, in which case the thermal network 100 may be in the form of a district heating network. A plurality of pumps may be a part of the suppliers 101-103 pumping thermal energy through the pipe system 115 of the thermal network 100.

The consumer side includes multi-flat buildings 104, 105, 110, 111, private houses 108, 112, and commercial buildings 106, 107, 109. Additionally, the consumer side may include industrial buildings, public buildings, factories, department stores, restaurants, hotels, etc. Each consumer 104-112 has a different loads profile, i.e. an energy usage profile, as energy demands are different and variable throughout the day for each consumer 104-112. However, consumers 104-112 may define groups 113, 114 based on a set of specific attributes. The multi-flat buildings 110, 111 may be grouped in one group 114 as they have similar energy usage profile and similar geographical coordinates. Similarly, the commercial buildings 106 and 107 may be grouped in one group 113 for the same reasons. A reason why the multi-flat buildings 105 and 106 are not grouped may be because they have different energy usage profiles as they may serve for different purposes, e.g., 104 may be a residential building while another one 105 may be mainly used as office space.

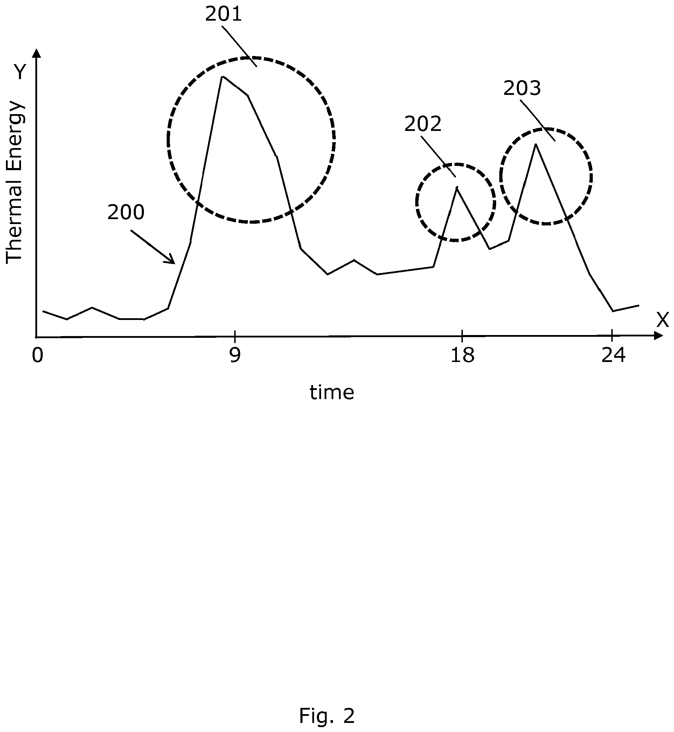

Fig. 2 shows a typical energy demand profile 200 during a day, comprising three peak load periods 201, 202, 203. The energy demand profile 200 represents thermal energy (shown on axis Y) required by a plurality of consumers throughout a day (shown on axis X). Loads imposed to the thermal network are a sum of loads from all the consumers on the consumer side. Loads for almost all the consumers vary throughout a day, and thereby the energy demand profile 200 imposed to the thermal network also varies throughout the day. During night and early morning, i.e., from midnight 0:00 until approximately 5:00, energy demands are very low. The first peak load 201 reflects high energy demands during morning hours, approximately around 7:00. This peak load may originate from consumers' behaviour, e.g., showering in the morning before going to daily activities. The other two peak loads 202 and 203 may again originate from consumers' behaviour, e.g., preparing dinner (peak load 202) and washing dishes, and/or taking an evening shower (peak load 203). The peak loads 201-203 have certain duration and may appear at a certain part of the day. The peak loads 201-203 may exceed the maximum energy that can be delivered from the suppliers. Therefore, there is a need to reduce the peak loads 201-203 in order to avoid implementation of additional suppliers at the supply side or directly at some of the consumers.

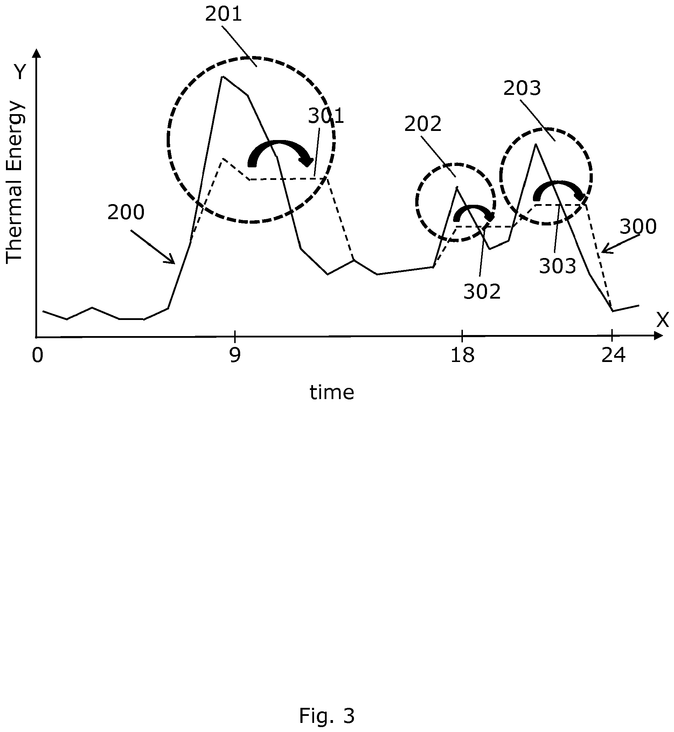

Fig. 3 shows a change in the energy profile 200 of Fig. 2 as a result of controlling energy supply distribution in a thermal network during peak loads 201-203 in accordance with a method according to an embodiment of the invention. As mentioned above, with reference to Fig. 2, the peak loads 201-203 may exceed the maximum energy that can be delivered from the suppliers. According to the embodiments of the invention, in order to control energy supply in the thermal network during peak loads at least one low-demand consumer is identified and energy supply towards the identified low-demand consumers is decreased during selected time period. The low-demand consumers have decreased energy demands during the selected time period.

During the first peak load 201, which occurs around 7AM and lasts approximately 1 hour, the thermal network identifies consumers which have low energy demands during this period. At this time of the day, e.g., commercial buildings and department stores may not need full energy supply and may be selected as low-demand consumers. The thermal network then decreases energy supply towards the low-demand consumers by, e.g., 20% thereby averaging out the energy consumption during the peak load 201. The energy profile after the decrease is shown by graph 300. The peak load 201 is averaged resulting into a shaved and shifted peak 301. To achieve the shaved and shifted peak 301, energy supply towards the low-demand consumers is reduced during the selected time period, which is typically longer than the duration of the peak 201 itself. Reduction of energy supply towards the low-demand consumers does not reduce comfort of these consumers as they have low energy demands during the selected time period.

The same is applied during the evening peak loads 202 and 203. During these time periods another set of low-demand consumers may be identified to result in the shaved and shifted peaks 302 and 303. For instance, public buildings may be closed at this time of the day, thereby not requiring the full power supply. Another example of selected low-demand consumer may be factories which does not have production line operating in evenings. The thermal network also performs determination of a required energy reduction. The required energy reduction depends on the peak loads 201-203 itself and a capacity of the thermal network at the time of the peak loads 201-203. Energy supply towards the remaining consumers of the plurality of consumers is maintained during the selected time periods. Namely, the remaining consumers will be supplied with the designed/contractual power without any disturbance.

By reducing energy supply towards selected consumers, the need for adding new power sources to the thermal network or the need for increasing/decreasing supply temperature is eliminated. Furthermore, by decreasing energy supply towards the low-demand consumers operating efficiency at the consumer side is improved, especially compared to a situation where these low demand consumers would be shut-off, as no energy is required for bringing energy supply to the low-demand consumers back to an original stage. Furthermore, operating efficiency at the supply side is also improved as substantially no energy is required for increasing energy supply towards the low-demand consumers. On the supply side the efficiency benefit comes from the lower losses in the thermal network when the peak loads 201-203 are managed by decreased energy supply towards the selected users compared to, e.g., increasing/decreasing supply temperature or adding new energy sources. Thereby, operating efficiency of the entire thermal network is improved. Additionally, re-distribution of energy between the consumers leads to reduction of the total energy demand on the network level and consequently to reduction of required energy in the peak loads periods 201-203 and the need for adding additional energy sources, e.g. starting up expensive peak load boilers or peak load chillers.

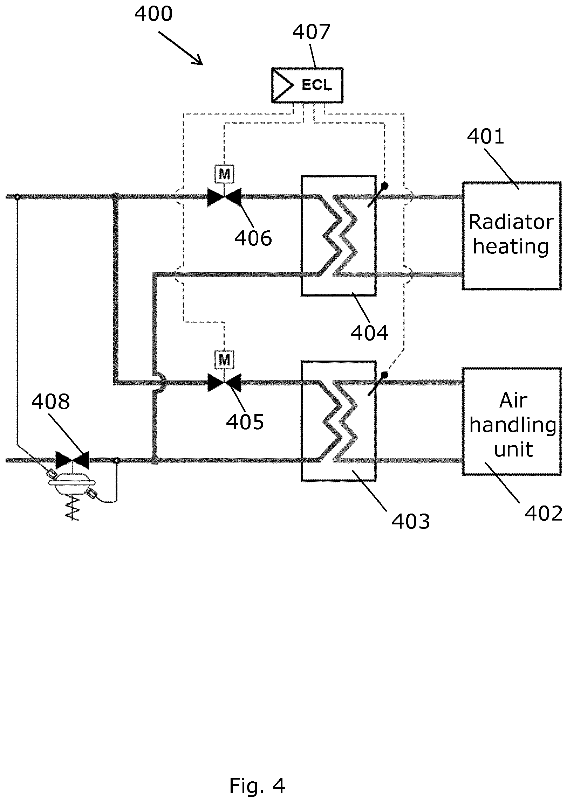

Fig. 4 illustrates a part of the thermal network on the consumer side 400. In this example, two consumer units 401 and 402 are connected to a heat transfer station. The consumer units 401 and 402 may belong to one residential house. The first unit 401 may be a system of radiators providing heating to the entire residential house, while the second unit 402 may provide hot air to the residential house. The heat transfer station comprises two heat exchangers 403, 404 to which two flow control valves 405, 406 are connected, an electronic temperature controller (ECL) 407 and a differential pressure valve 408 which maintains constant pressure drop over the flow control valves 405, 406. The flow control valves 405, 406 may, e.g., be a motorized control valve comprising an actuator which moves a spindle of the valve and thereby reduces or increases the flow through the valve. In one alternative, the differential pressure valve 408 may be integrated into the flow control valves 405, 406, to form a pressure independent control valves (PICV). By maintaining constant differential pressure over the flow control valves 405, 406, it is possible to control flow and energy at heat transfer units 401, 402. If the consumer 401, 402 is identified as a low-demand consumer during a selected period of time, energy supply will be decreased by controlling mass flow between a supply side (not shown) and the consumer 401, 402. Energy supply is decreased by reducing the differential pressure across the differential pressure valve 408 arranged at the interface between the supply side and the identified low-demand consumer 401, 402.

## Claims

1. A method for controlling energy supply distribution in a thermal network (100) during peak loads (201-203), the thermal network (100) comprising a supply side, and a consumer side configured to communicate with the supply side, the consumer side comprising a plurality of consumers (104-112, 401, 402), each being arranged to consume thermal energy from the thermal network (100), and being connected to the supply side, and the supply side comprising one or more suppliers (101-103), each being arranged to supply thermal energy to the thermal network (100), the method comprising the steps of:
- identifying at least one low-demand consumer from the plurality of consumers (104-112, 401, 402), the low-demand consumer having decreased energy demands during selected time periods,
- decreasing energy supply towards the identified low-demand consumer(s) by controlling mass flow between the supply side and the identified low-demand consumer(s) during the selected time periods, and
- maintaining energy supply towards the remaining consumers of the plurality of consumers (104-112, 401, 402) during the selected time periods,
**characterized in that** the consumer side comprises a plurality of differential pressure valves (408), each of the plurality of differential pressure valves (408) being arranged at the interface between the supply side and one of the plurality of consumers (104-112, 401, 402), and **in that** the step of decreasing energy supply towards the low-demand consumer(s) by controlling mass flow is performed by reducing the differential pressure across the differential pressure valve(s) (408) arranged at the interface between the supply side and the identified low-demand consumer(s).

2. A method according to claim 1, wherein the consumer side comprises a plurality of flow control valves (405, 406), each of the plurality of flow control valves (405, 406) being arranged at the interface between the supply side and one of the plurality of consumers (104-112, 401, 402), and wherein the step of decreasing energy supply towards the low-demand consumers by controlling mass flow is performed by reducing the mass flow through the flow control valve(s) (405, 406) arranged at the interface between the supply side and the identified low-demand consumer(s).

3. A method according to any of the preceding claims, further comprising the step of determining a required energy reduction, the step being performed before the step of decreasing energy supply towards the identified low-demand consumer(s).

4. A method according to claim 3, wherein the step of determining the required energy reduction is performed by a computer unit.

5. A method according to any of the preceding claims, further comprising the step of defining one or more groups of consumer (113, 114) based on a set of specific attributes.

6. A method according to any of the preceding claims, wherein at least some of the remaining consumers have increased energy demands during the selected time periods.

7. A method according to any of the preceding claims, wherein the thermal network (100) is a heating network.

8. A method according to any of the claims 1-6, wherein the thermal network (100) is a cooling network.

9. A system for controlling energy supply distribution in a thermal network (100) during peak loads (201-203), the thermal network (100) comprising a supply side, and a consumer side configured to communicate with the supply side, the consumer side comprising a plurality of consumers (104-112, 401, 402), each being arranged to consume thermal energy from the thermal network (100), and being connected to the supply side, and the supply side comprising one or more suppliers (101-103), each being arranged to supply thermal energy to the thermal network (100), the system further comprising:
- means for identifying at least one low-demand consumer from the plurality of consumers (104-112, 401, 402), the low-demand consumer having decreased energy demands during selected time periods, and
- a mass flow controlling means (405, 406, 408) configured to decrease energy supply towards the identified low-demand consumer(s) during the selected time periods, the mass flow controlling means (405, 406, 408) being installed between the supply side and the identified low-demand consumer(s),
**characterized in that** the mass flow controlling means comprises a plurality of differential pressure valves (408), each of the plurality of differential pressure valves (408) being arranged at the interface between the supply side and one of the plurality of consumers (104-112, 401, 402), and **in that** the decrease in energy supply towards the low-demand consumer(s) is obtained by reducing the differential pressure across the differential pressure valve(s) (408) arranged at the interface between the supply side and the identified low-demand consumer(s).

10. A system according to claim 9, wherein the thermal network (100) is a heating network.

11. A system according to claim 9, wherein the thermal network (100) is a cooling network.

## Patentansprüche

1. Verfahren zum Steuern der Energieversorgungsverteilung in einem thermischen Netz (100) während Spitzenlasten (201-203), wobei das thermische Netz (100) eine Versorgungsseite und eine Verbraucherseite umfasst, die dazu ausgelegt ist, mit der Versorgungsseite zu kommunizieren, wobei die Verbraucherseite eine Vielzahl von Verbrauchern (104-112, 401, 402) umfasst, die jeweils dazu angeordnet sind, Wärmeenergie aus dem thermischen Netz (100) zu verbrauchen, und mit der Versorgungsseite verbunden sind, und die Versorgungsseite einen oder mehrere Versorger (101-103) umfasst, die jeweils dazu angeordnet sind, Wärmeenergie an das thermische Netz (100) zu liefern, wobei das Verfahren die folgenden Schritte umfasst:
- Identifizieren mindestens eines Verbrauchers mit niedrigem Bedarf aus der Vielzahl von Verbrauchern (104-112, 401, 402), wobei der Verbraucher mit niedrigem Bedarf während ausgewählter Zeiträume einen verringerten Energiebedarf aufweist,
- Verringern der Energiezufuhr zu dem/den identifizierten Verbraucher(n) mit niedrigem Bedarf durch Steuern des Massenstroms zwischen der Versorgungsseite und dem/den identifizierten Verbraucher(n) mit niedrigem Bedarf während der ausgewählten Zeiträume, und
- Aufrechterhalten der Energieversorgung für die verbleibenden Verbraucher der Vielzahl von Verbrauchern (104-112, 401, 402) während der ausgewählten Zeiträume,
**dadurch gekennzeichnet, dass** die Verbraucherseite eine Vielzahl von Differenzdruckventilen (408) umfasst, wobei jedes der Vielzahl von Differenzdruckventilen (408) an der Schnittstelle zwischen der Versorgungsseite und einem der Vielzahl von Verbrauchern (104-112, 401, 402) angeordnet ist, und dass der Schritt des Verringerns der Energiezufuhr zu dem/den Verbraucher(n) mit niedrigem Bedarf durch Steuern des Massenstroms durch Verringern des Differenzdrucks an dem/den Differenzdruckventil(en) (408), die an der Schnittstelle zwischen der Versorgungsseite und dem/den identifizierten Verbraucher(n) mit niedrigem Bedarf angeordnet sind, durchgeführt wird.

2. Verfahren gemäß Anspruch 1, wobei die Verbraucherseite eine Vielzahl von Durchflusssteuerventilen (405, 406) umfasst, wobei jedes der Vielzahl von Durchflusssteuerventilen (405, 406) an der Schnittstelle zwischen der Versorgungsseite und einem der Vielzahl von Verbrauchern (104-112, 401, 402) angeordnet ist, und wobei der Schritt des Verringerns der Energiezufuhr zu den Verbrauchern mit niedrigem Bedarf durch Steuern des Massenstroms durch Verringern des Massenstroms über das (die) an der Schnittstelle zwischen der Versorgungsseite und dem (den) identifizierten Verbraucher(n) mit niedrigem Bedarf angeordnete(n) Durchflusssteuerventil(e) (405, 406) durchgeführt wird.

3. Verfahren gemäß einem der vorhergehenden Ansprüche, ferner umfassend den Schritt des Bestimmens einer erforderlichen Energiereduzierung, wobei der Schritt vor dem Schritt des Verringerns der Energiezufuhr zu dem/den identifizierten Verbraucher(n) mit niedrigem Bedarf durchgeführt wird.

4. Verfahren gemäß Anspruch 3, wobei der Schritt des Bestimmens der erforderlichen Energiereduktion durch eine Computereinheit durchgeführt wird.

5. Verfahren gemäß einem der vorhergehenden Ansprüche, ferner umfassend den Schritt des Definierens einer oder mehrerer Gruppen von Verbrauchern (113, 114) basierend auf einer Reihe spezifischer Attribute.

6. Verfahren gemäß einem der vorhergehenden Ansprüche, wobei mindestens einige der verbleibenden Verbraucher während der ausgewählten Zeiträume einen erhöhten Energiebedarf haben.

7. Verfahren gemäß einem der vorhergehenden Ansprüche, wobei das thermische Netz (100) ein Heizungsnetz ist.

8. Verfahren gemäß einem der Ansprüche 1-6, wobei das thermische Netz (100) ein Kühlnetz ist.

9. System zum Steuern der Energieversorgungsverteilung in einem thermischen Netz (100) während Spitzenlasten (201-203), wobei das thermische Netz (100) eine Versorgungsseite und eine Verbraucherseite umfasst, die dazu ausgelegt ist, mit der Versorgungsseite zu kommunizieren, wobei die Verbraucherseite eine Vielzahl von Verbrauchern (104-112, 401, 402) umfasst, die jeweils dazu angeordnet sind, Wärmeenergie aus dem thermischen Netz (100) zu verbrauchen, und mit der Versorgungsseite verbunden sind, und die Versorgungsseite einen oder mehrere Versorger (101-103) umfasst, die jeweils dazu angeordnet sind, Wärmeenergie an das thermische Netz (100) zu liefern, wobei das System ferner Folgendes umfasst:
- Mittel zum Identifizieren mindestens eines Verbrauchers mit niedrigem Bedarf aus der Vielzahl von Verbrauchern (104-112, 401, 402), wobei der Verbraucher mit niedrigem Bedarf während ausgewählter Zeiträume einen verringerten Energiebedarf aufweist, und
- ein Massenstrom-Steuerungsmittel (405, 406, 408), das dazu ausgelegt ist, die Energiezufuhr zu dem/den identifizierten Verbraucher(n) mit niedrigem Bedarf während der ausgewählten Zeiträume zu verringern, wobei das Massenstrom-Steuerungsmittel (405, 406, 408) zwischen der Versorgungsseite und dem/den identifizierten Verbraucher(n) mit niedrigem Bedarf installiert ist,
**dadurch gekennzeichnet, dass** das Massenstrom-Steuerungsmittel eine Vielzahl von Differenzdruckventilen (408) umfasst, wobei jedes der Vielzahl von Differenzdruckventilen (408) an der Schnittstelle zwischen der Versorgungsseite und einem der Vielzahl von Verbrauchern (104-112, 401, 402) angeordnet ist, und dass die Verringerung der Energiezufuhr zu dem/den Verbraucher(n) mit niedrigem Bedarf durch Verringerung des Differenzdrucks an dem/den Differenzdruckventil(en) (408), die an der Schnittstelle zwischen der Versorgungsseite und dem/den identifizierten Verbraucher(n) mit niedrigem Bedarf angeordnet sind, erreicht wird.

10. System gemäß Anspruch 9, wobei das thermische Netz (100) ein Heizungsnetz ist.

11. System gemäß Anspruch 9, wobei das thermische Netz (100) ein Kühlnetz ist.

## Revendications

1. Procédé pour commander une distribution d'alimentation en énergie dans un réseau thermique (100) durant des charges de pointe (201-203), le réseau thermique (100) comprenant un côté alimentation, et un côté consommateur configuré pour communiquer avec le côté alimentation, le côté consommateur comprenant une pluralité de consommateurs (104-112, 401, 402), chaque étant agencé pour consommer de l'énergie thermique provenant du réseau thermique (100), et étant raccordé au côté alimentation, et le côté alimentation comprenant un ou plusieurs fournisseurs d'alimentation (101-103), chacun étant agencé pour effectuer l'alimentation en énergie thermique au réseau thermique (100), le procédé comprenant les étapes de :
- l'identification d'au moins un consommateur à faible demande parmi la pluralité de consommateurs (104-112, 401, 402), le consommateur à faible demande ayant des demandes en énergie abaissées durant des périodes sélectionnées,
- l'abaissement de l'alimentation en énergie vers le ou les consommateur(s) à faible demande identifié(s) en commandant un débit massique entre le côté alimentation et le ou les consommateur(s) à faible demande identifié(s) durant les périodes sélectionnées, et
- le maintien de l'alimentation en énergie vers les autres consommateurs de la pluralité de consommateurs (104-112, 401, 402) durant les périodes sélectionnées,
**caractérisé en ce que** le côté consommateur comprend une pluralité de soupapes à pression différentielle (408), chacune de la pluralité de soupapes à pression différentielle (408) étant agencée à l'interface entre le côté alimentation et un de la pluralité de consommateurs (104-112, 401, 402), et **en ce que** l'étape de l'abaissement de l'alimentation en énergie vers le ou les consommateur(s) à faible demande en commandant un débit massique est réalisé en réduisant la pression différentielle à travers la ou les soupape(s) à pression différentielle (408) agencée(s) à l'interface entre le côté alimentation et le ou les consommateur(s) à faible demande identifié(s).

2. Procédé selon la revendication 1, dans lequel le côté consommateur comprend une pluralité de soupapes de commande de débit (405, 406), chacune de la pluralité de soupapes de commande de débit (405, 406) étant agencée à l'interface entre le côté alimentation et un de la pluralité de consommateurs (104-112, 401, 402), et dans lequel l'étape de l'abaissement de l'alimentation en énergie vers les consommateurs à faible demande en commandant un débit massique est réalisé en réduisant le débit massique à travers la ou les soupape(s) de commande de débit (405, 406) agencée(s) à l'interface entre le côté alimentation et le ou les consommateur(s) à faible demande identifié(s).

3. Procédé selon l'une quelconque des revendications précédentes, comprenant en outre l'étape de la détermination d'une réduction d'énergie requise, l'étape étant réalisée avant l'étape de l'abaissement de l'alimentation en énergie vers le ou les consommateur(s) à faible demande identifié(s).

4. Procédé selon la revendication 3, dans lequel l'étape de la détermination de la réduction d'énergie requise est réalisée par une unité informatique.

5. Procédé selon l'une quelconque des revendications précédentes, comprenant en outre l'étape de définissant un ou plusieurs groupes de consommateurs (113, 114) sur la base d'un ensemble d'attributs spécifiques.

6. Procédé selon l'une quelconque des revendications précédentes, dans lequel au moins certains des autres consommateurs ont des demandes en énergie accrues durant les périodes sélectionnées.

7. Procédé selon l'une quelconque des revendications précédentes, dans lequel le réseau thermique (100) est un réseau de chauffage.

8. Procédé selon l'une quelconque des revendications 1 à 6, dans lequel le réseau thermique (100) est un réseau de refroidissement.

9. Système pour commander distribution d'alimentation en énergie dans un réseau thermique (100) durant des charges de pointe (201-203), le réseau thermique (100) comprenant un côté alimentation, et un côté consommateur configuré pour communiquer avec le côté alimentation, le côté consommateur comprenant une pluralité de consommateurs (104-112, 401, 402), chacun étant agencé pour consommer de l'énergie thermique provenant du réseau thermique (100), et étant raccordé au côté alimentation, et le côté alimentation comprenant un ou plusieurs fournisseurs d'alimentation (101-103), chacun étant agencé pour effectuer l'alimentation en énergie thermique au réseau thermique (100), le système comprenant en outre :
- un moyen pour identifier au moins un consommateur à faible demande parmi la pluralité de consommateurs (104-112, 401, 402), le consommateur à faible demande ayant des demandes en énergie abaissées durant des périodes sélectionnées, et
- un moyen de commande de débit massique (405, 406, 408) configuré pour abaisser l'alimentation en énergie vers le ou les consommateur(s) à faible demande identifié(s) durant les périodes sélectionnées, le moyen de commande de débit massique (405, 406, 408) étant installé entre le côté alimentation et le ou les consommateur(s) à faible demande identifié(s),
**caractérisé en ce que** le moyen de commande de débit massique comprend une pluralité de soupapes à pression différentielle (408), chacune de la pluralité de soupapes à pression différentielle (408) étant agencée à l'interface entre le côté alimentation et un de la pluralité de consommateurs (104-112, 401, 402), et **en ce que** l'abaissement de l'alimentation en énergie vers le ou les consommateur(s) à faible demande est obtenue en réduisant la pression différentielle à travers la ou les soupape(s) à pression différentielle (408) agencée(s) à l'interface entre le côté alimentation et le ou les consommateur(s) à faible demande identifié(s).

10. Système selon la revendication 9, dans lequel le réseau thermique (100) est un réseau de chauffage.

11. Système selon la revendication 9, dans lequel le réseau thermique (100) est un réseau de refroidissement.
